# EUROPEAN PATENT APPLICATION

(11) **EP 1 531 344 A1**
(43) Date of publication of application: **18.05.2005**
(21) Application number: 03025955.0
(22) Date of filing: 13.11.2003
(51) Int. Cl.: G01T 3/06, G01T 3/08

(54) **A pixel detector for neutron radiography and process for detecting incident neutrones**

(71) Applicant: PAUL SCHERRER INSTITUT, 5232 Villigen PSI (CH)
(72) Inventor: Brönnimann, Christian, Dr., 5422 Oberehrendingen (CH); Lehmann, Eberhard, Dr., 79761 Waldshut-Tiengen 2 (DE)
(74) Representative: Fischer, Michael, Dr.

(57) **Abstract**

A pixel detector for neutron radiography, comprising:
- a layer of photosensitive material coated with a neutron capture layer, preferably ¹⁵⁷Gd;
- an NxM array of photodetector diodes arranged in said layer of photosensitive material; each diodes having a bias potential interface and a diode output interface, the interfaces being connected;
- an NxM array of high gain, low noise readout unit cells, comprising an input interface connected to said diode output interface and a high-gain voltage amplifying means comprising a discriminator unit having an upper and/or lower threshold unit, a window logic for handling the upper and lower threshold unit and digital counter unit counting an output signal of the window logic; and
- a multiplexing means comprising a row select and a column select circuit allowing to access each readout cell unit individually for controlling the threshold unit in order to generate a lower and/or an upper threshold.

## Description

The invention relates to a pixel detector for neutron radiography. Further, the invention relates to a process for detecting incident neutrons using a semiconductor pixel detector.

The application of thermal and cold neutrons for imaging purposes has a tradition since strong neutron sources became available. The application of this technique is mainly for non-destructive testing, complementary to standard X-ray methods. Exploiting the much higher sensitivity for light nuclides and the good penetrability for heavy metals, neutron radiography methods have been applied in many fields of industrial applications and of material research.

Because neutrons are not detectable directly, a conversion reaction is required (e.g. capture in Li-6, B-10, He-3 or Gd) coupled with a secondary emission of ionizing radiation. Traditionally, some X-ray films have been used for radiography purposes. In the past few years, a strong development has taken place towards digital imaging systems for neutrons too, enabling much higher sensitivity, good linearity and the opportunity for quantification on the basis of the obtained numerical information.

The changed options in the detector technology in respect to spatial and time resolution made such applications possible like neutron tomography, real-time imaging and phase enhanced contrast imaging. Presently, neutron sensitive imaging plates and special CCD cameras in connection with a scintillator are in use for this purpose. Flat panel detectors based on the amorphous silicon technology starts to be introduced into the field of application.

A typical semiconductor detector is disclosed in US 6,545,281 showing and describing a particle detecting semiconductor substrate having a first surface including at least one cavity extending into said semiconductor substrate. Further, a thin neutron responsive layer, such as ¹⁰B, ⁶Li, ⁶LiF, U or Gd, is disposed on the first surface of the semiconductor substrate and responsive to energetic neutrons incident thereon for producing first and second charged reaction particles directed in opposite directions, wherein the neutron responsive layer is further disposed in said at least one cavity for increasing neutron detection efficiency by increasing the likelihood that the charged particles will be directed into said semiconductor substrate. Unfortuantely, this citation does not discuss the dimensions of the neutron responsive cells and does not deliver any indication whether the apparatus could be used for high resolution fast single neutron counting. The same applies for a solid radiation converter for use in neutron imaging detectors that is disclosed in EP 0 682 268 A2. Additionally, the afore-mentioned converter is more complicated due to the use of an intermediate secondary electron emitter, preferably an alkali halide emitter, such as CsI. Said intermediate emitter is layered between the neutron capture layer and an electron multiplier, preferably a vacuum micro channel plate (MCP) multiplier, a vacuum microshere plate (MSP), or any other vacuum electron multiplier and imaging device. Alternatively, or a gaseous electron imaging multiplier, preferably a a gaseous electron multiplier in which the secondary electron multiplication starts at their emission location from the converter, preferably a low-pressure multistage electron multiplier, can be used.

Resuming the prior art documents it will be apparent that none of the documents disclose a neutron counting imaging device that allow high readout performance und superior reliability of operation. It is therefore the aim of the invention to provide a high resolution and high sensitive detector for the detection of incident neutrons combining a simple architecture without using additional intermediate layer or other intermediate products and/or particles. Further, it is an aim of the invention to provide a process for establishing high spatial resolution and fast readout performance.

Theses tasks are resolved according to the invention with respect to the detector by a pixel detector for neutron radiography, comprising:
a) a layer of photosensitive material coated with a neutron capture layer, preferably ¹⁵⁷Gd;
b) an NxM array of photodetector diodes arranged in said layer of photosensitive material; each of said photodetector diodes having a bias potential interface and a diode output interface, said bias potential interface of each photodetector diode being connected to said bias potential;
c) an NxM array of high gain, low noise readout unit cells, one readout unit cell for each photodetector diode;
d) each readout unit cell comprising an input interface connected to said diode output interface and a high-gain voltage amplifying means comprising a discriminator unit having a threshold unit, a digital counter unit counting an output signal of the discriminator unit; and
e) a multiplexing means comprising a row select and a column select circuit allowing to access each readout cell unit individually for controlling the threshold unit in order to generate a lower and/or an upper threshold.

According the these measures, a neutron counting imaging device is created having an architecture of the readout circuitry that allows to be tolerant with respect to a local defect of a detector diode and/or readout unit cell and that allow to control and redesign the program and/or the status of each detector diode and/or readout unit cell. Due to the very complex particle and/or radiation release after neutron capture the ability to define the lower and/or upper threshold for the signal taken from the photo diodes allows to specify the part of secondary neutron capture particles and/or radiation that is best suited for further processing and evaluation for proof of incident neutrons. In view of the next generation of pulsed neutron sources, this type of a hybrid pixel detector offers a superior alternative to the above mentioned scintillation systems. These detectors are currently developed for high energy physics experiments like ALICE, ATLAS, BTeV, CMS and the LHCb RICH, with areas of several m² and millions of readout channels. Additionaly, this type of detector has the feature to separate sensor material (i.e. high resistivity silicon) from the read-out electronics, which can be designed in the latest CMOS-technologies. Therefore, this detector makes use of the low capacitance per pixel and is operatable in a single counting mode for each incident electron and/or photon, with a counter per pixel, which leads to completely digital storage and readout of the number of electrons and/or photons per pixel that allow due to the threshold set mode to prove each neutron captured in the neutron capture layer section which is assigned to the corresponding distinct photo diode. The frontends of such pixel detectors are optimized for rates of up to 1 MHz/pixel, leading to rate capabilities of up to 10¹⁰ s⁻¹ cm⁻². These detectors are candidates for experiments at the future sources like JSNS and SNS with expected average fluxes of about 10¹⁴ s⁻¹ cm⁻², when considering absorption and scattering of the neutrons in the samples.

An advantageous architecture comprises the diode output interface of the photodetector diodes and the input interface of the readout unit cell to be connected to each other by bump bonding, preferably using indium bumps for the bump bonding. This measure facilitates the manufacturing of a photodetector diode and readout cell unit assembly at considerably low temperatures. Using the indium bumps leads in detail to soldering temperatures lower than 100°C that not jeopardizes the fine structures of the complete assembly.

To allow control and access to each of the readout unit cells and/or detector diodes the data processing means are provided being connected via the multiplexer means to said array of readout unit cells. Therefore, two independent shift register of the multiplexing means can access the circuitry of one pixel by electing the respective pixel via row and column select. To interact with the data processing means each readout unit cell comprises an AND-gate having as inputs the row select and the column select of the multiplexing means. If both inputs are high the AND-gate set high and access to the readout unit cell is established.

In order to globally or individually adjust a proper sensisitivity of all or only of an individual detector diode the source of threshold voltage supply to said high-gain voltage amplifying means comprises at least one adjustable source of threshold voltage supply, being controlled by the data processing means via the multiplexer means. Therefore, the lower and/upper threshold could be set for the ensemble of photodetector diode or a selectable number thereof. Additionally, the at least one adjustable source of threshold voltage supply can be used as a source for threshold voltage correction supply in order to calibrate the sensitivity of each distinct circuitry to the desired global level.

A consequential measure provides the data processing means to control via the multiplexing means one or more of the following issues:
a) programming of the readout unit cell via a port;
b) readout of the data in the readout unit cell via a port;
c) calibration of the readout unit cell, preferably the high gain voltage amplifier means, via a port;
d) analyzing the analog signal in the high gain voltage amplifier means for the purpose of diagnosis via a port; and
e) setting a lower and/or an upper threshold to the threshold unit.

This measure now in detail explains the advantages derivable from the afore-mentioned multiplexing means that allow the direct access to each readout unit cell. The calibration in the regard is considered to be able to calibrate the bias of each photodetector diode. Another calibration can be achieve by the afore-mentioned adjustment of the threshold voltage by the threshold voltage correction supply. For evaluating the status of the photodetector diode and/or the analog part of the readout unit cell circuitry in detail the analysis of the analog signal processed with the high gain voltage amplifier means is very helpful and could only be achieved by the ability to address a distinct detector pixel using two independent row and coloumn address registers of the multiplexing means.

According to the above-mentioned process these aims are achieved according to the invention by A process for detecting incident neutrons using a semiconductor pixel detector, comprising:
a) coating the surface of a semiconductor photodetector diode layer with a neutron capture layer;
b) thereby selecting the thickness of the neutron capture layer depending on the penetration depth of the neutrons in order to allow a selectable sort of secondary neutron capture particles and/or radiation to be absorbed in the semiconductor photodetector diode layer;
c) setting a lower and/or an upper threshold value to each readout unit cell, each photodetector diode having its own readout unit cell; and
d) counting an output signal amplified in the readout unit cell under the appearance of the lower and/or upper threshold value.

Again, this process takes in a smart manner advantage of the fact that usually the capture of the neutron in the neutron capture layer is accompanied subsequently by the secondary neutron capture particles and/or radiation, such as auger electron, photons, alpha-particles, beta-particles. Those particles and/or radiation have a very broad spread of energy levels and absorption cross section in the semiconductor photodetector diodes. It shall be mentioned that under a photodetector diode even a detector diode for particles is understood. Therefore, by establishing the correct thickness of the neutron capture layer and thereby considering the average penetration depth of the neutron that is an exponential function of the neutron energy and the absorption cross section for the elected secondary neutron capture particles and/or radiation and adjusting the lower and/or upper threshold to the average rate of electron hole pairs generated by the elected secondary neutron capture particle and/or radiation when absorbed in a photodetector diode, a very sensitive process for neutron detection with high spatial und time resolution is achieved.

Within the dimension of the photodetector diodes the best match with respect to spatial resolution is derivable by selecting the sort of secondary neutron capture particles or radiation depending on the penetration depth in the semiconductor photodetector diode layer under the circumstance that the average penetration depth is equal or lower than the dimensions of the photo diodes disposed in said semiconductor photo diode layer. I.e., when considering a ¹⁵⁷Gd neutron capture layer the subsequent nuclear disintegration after neutron capture lead beside others to emission of conversion electrons in the range of 29 to 182 KeV which are emitted in 4p. If they escape the Gd converter in the direction of the Si-senor they are detected with a probability of almost 100%. By selecting these electrons for counting the incoming neutrons at a distinct location because these emitted electrons are completely absorbed in a photodetector diode having about 10 to 500 microns, preferably 50 to 300 microns, in length, width and depth.

Alternatively or additionally, by setting the lower and/or upper threshold in order to discriminate the signals from the unwanted radiation, which is emitted by through the neutron capture process, the method yield to a superior spatial resolution of the incident neutrons.

These and other features of the present invention can be best understood from the following specification and drawings, the following of which is a brief description. Thereby showing in:
- Figure 1: a schematic view of a photodetector diode;
- Figure 2: a schematic view of a part of a sensor module comprising an array of photodetector diodes as one of them is shown in Figure 1;
- Figure 3: a sensor module as a basic element for a neutron counting imaging device having a number of those sensor modules with a sensor module control board;
- Figure 4: a schematic view on a sensor module readout process;
- Figure 5: a detailed blockdiagram of an enhanced readout unit cell used with the photodetector diodes as shown in figures 1 and 2;
- Figure 6: three diagram of an actual neutron counting experiment;
- Figure 7: a diagram of the average counts per pixel after switching off the neutron beam;
- Figure 8: a schematic view on a neutron detector; and
- Figure 9: a schematic blockdiagram of the enhanced readout unit cell circuitry including a window logic unit.

In the following context a photodetector diode 2 is understood as a semiconductor diode in which radiation and/or particles are at least partially absorbed under simultaneous generation of electron hole pairs.

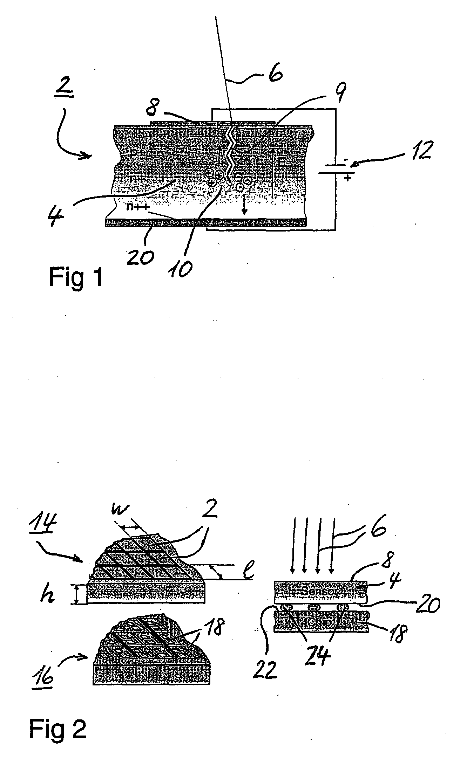

Figure 1 illustrates schematically the architecture of a photodetector diode 2 having a doped semiconductor p⁺, n⁺, n⁺⁺ trespassing section 4. The material choosen for the photodetector diode 2 depends on the desired bandgap energy required to generate a sufficient number of electron hole pairs. Suitable materials are undoped amorphous silicon having band gap of 1.12 eV and a bundle of IV-IV compounds and III-V compounds (indium and gallium salts, like gallium arsenide or indium antimonide).

An incident neutron 6 is captured in a neutron capture layer 8 that is chosen in this example to be a layer of pure ¹⁵⁷Gd having a thickness of 5 µm. The captured neutron leads to heavier ¹⁵⁸Gd which decays under the generation of a bundle of secondary neutron capture particle 9 and radiation 9 which will be described in detail below. Considered are in this context the generated conversion electrons 9 having an energy in the range of 29 to 182 KeV before entering the doped semiconductor p⁺, n⁺, n⁺⁺ trespassing section 4. These electrons are selected because its average penetration depth in the trespassing section 4 lays in the range of several micron. These electrons (and of course, any other type of the other secondary neutron capture particles and radiation) causes according to its energy and to the energy gap of the doped semiconductor p⁺, n⁺, n⁺⁺ trespassing section 4 a respective number of electron hole pairs 10 in a distinct photodetector diode 2. In the drawings, this number of electron hole pairs is exemplarily shown by a few electron-hole pairs 10 being divided by the electrical field generated by a source of bias potential 12. The evaluation of the charge occurred from the electron hole pairs 10 will be described below with reference to figure 5.

Figure 2 shows a schematical view of a two-dimensional pixel detector 14 having a number of photodetector diodes 2 arranged in an array of 22 rows and 32 columns. The photodetector diodes 2 have a length 1 and a width w of about 200 µm and a height of about 300 µm. Below the plane of these photodetector diodes 2 a readout chip 16 having a corresponding number of readout unit cells 18 is arranged for collecting the charge from the electron hole pairs 10 generated in the respective photodetector diodes 2. The electrical conjunction between a diode output interface 20 of the photodetector diodes 2 and an input interface 22 of the readout unit cells 18 is achieved by bump bonding using indium bumps 24. With reference to Figur 8, the shown neutron detector 14 is used to explain the sophisticated mechanism of the neutron detection. The neutrons 6 themselves are captured in the Gd neutron capture layer 8 and as a result of this neutron annihilation process a number of secondary neutron capture particles, like conversion electrons 9, and neutron capture radiation, like x-rays 7, originate from the lieu of capture. But only the conversion electrons 9, and from their versatility only a distinct portion having an energy sufficient to escape the Gd neutron capture layer 8 and then emitted in the direction of the Si diode, are then absorbed in the same Si diode 2 which is related to the portion of the adjacent neutron capture layer 8, in which the neutron was originally captured. As indicated exemplarily for the x-rays 7, they are absorbed in diodes 2 pretty apart from the neutron capture position. Therefore, only by detecting the conversion electrons 7 as shown in Figure 8 the desired superior spatial neutron detection resolution can be achieved.

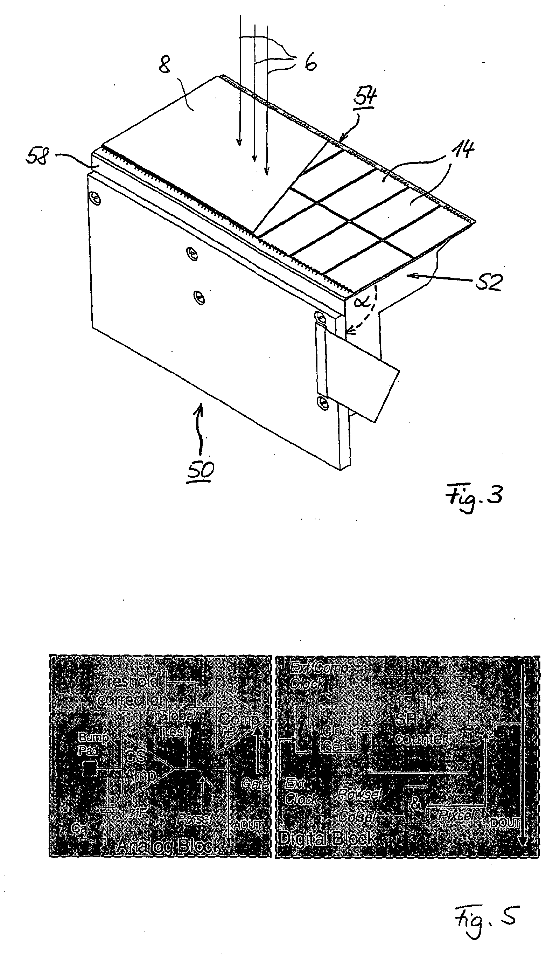

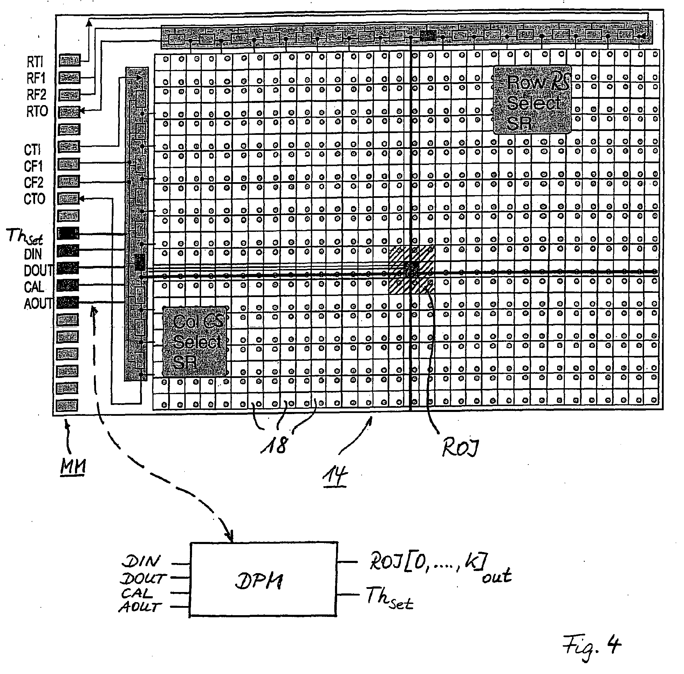

Figure 3 illustrates a solid-state neutron-counting imaging device 50 detecting the incident neutron indirectly via the occurring secondary neutron capture particles and radiation over a comparably large flat area. The present architecture combines a number of sixteen pixel sensors 14 being arranged on a first substantially flat support plate 52 for building a sensor module 54, and a sensor module control board 56 being arranged on a second substantially flat support plate 58 hosting the electronic evaluation equipment, i.e. multiplexing means MM, data processing means DPM, which follow an electronic readout equipment 44 as it is illustrated in figures 4 and 5. The first substantially flat support plate 52 and the second substantially flat support plate 58 being arranged under an angle of 90°. This measure allows to construct a plane or curved detector surface area (here not shown in the drawings) made from a number of sensor modules 54 having the sensor module control boards 56 oriented to the opposite side of its detector surface.

Figure 4 now shows a schematic view on a sensor module readout process indicating that appropriate multiplexing means MM allowing with a row select logic RS and a column select logic CS to address a predetermined readout unit cell 18 in order to readout the value of a digital counter SRC. This addressability lead to the capability of the complete neutron counting imaging device 50 to access and/or control continiously or temporarily each readout unit cell. The neutron counting imaging device 50 owns the capability to access and/or control via the data processing means DPM via the multiplexing means MM one or more of the following issues:
a) programming of the readout unit cell 18 via a port DIN;
b) readout of the data in the readout unit cell 18 via a port DOUT;
c) calibration of the readout unit cell 18, preferably the high gain voltage amplifier means AMP, via a port CAL;
d) analyzing the analog signal in the high gain voltage amplifier means AMP for the purpose of diagnosis via a port AOUT; and
e) setting a lower and/or an upper threshold via a threshold unit PRG_LATCH and a port Th_{Set}.

All the afore-mentioned ports DIN, DOUT, CAL, AOUT and Th_{Set} are comprised in the readout bus RB that is controlled by the data processing means DPM. With respect to the multiplexer means MM, it has to be pointed out additionally that this multiplexer means MM is substantially a separate chip being located on the sensor module control board 56. This separate chip generates a chip select for at least one or all of the readout chips assigned to each of the pixel sensors 14. Each readout chip itself comprises a column select shift register and a row select shift register for selecting a distinct sensor pixel. Therefore, in principal the multiplexing means MM are assigned to both each readout chip and the sensor module control board 56. Additionally, figure 4 depicts a region of interest ROI containing in this example nine photodetector diodes 2 which can be accessed separately in a specific way to allow high time resoluted monitoring of the output signal OS after the puls generator PG.

Figur 5 now in detail illustrates the design of the electronic equipment of the readout unit cells 18, 36. An analog part 46 is shown comprising the low noise, high gain amplifier Amp and the comparator COMP. The analog part 46 is thereby shown in a shaded manner. Any other component shown in this figure 5 contributes to a digital part 48. Additionally, controlling of the analog part 46 is represented by a calibration and threshold correction unit DAC + LATCH which on the one hand side controls a calibration switch CALSWITCH and on the other hand side sets the voltage level for the supply of threshold voltage correction TC. The calibration and threshold correction unit DAC + LATCH is addressed by both setting the AND-gate for the column select CS and the row select RS and the AND-gate for latch programming PRGL to "High" (logically to "1").

Within the normal counting operation, the output signal OS is processed with the pulse generator and the counter SRC. With respect to the selection of a specific region of interest ROI as shown in Figur 4, the signal after the pulse generator PG is processed to a region of interest unit ROI SEL that can be programmed by a port PRG_ROI. The region of interest unit ROI SEL so far administrates the incoming signal from the pulse generator PG and assigns these signals to the predefined region of interest ROI. Beside it should be mentioned that a number of different regions of interests ROI(0,...,K) can be predetermined although only one region of interest is shown in figure 4. The assignment is made by setting an output signal to the respective region of interest output interface ROI(0,...,K)ₒᵤₜ which is connected to the data processing means DPM. The occurrence of this output signal is accompanied by a time stamp which is stored to the data processing means DPM with reference to the respective region of interest ROI. In this manner, the time stamps represent the occurrence of the incident neutron 6 in the preselected region of interest ROI. Therefore, a significant higher time resolution for the arrival time of the neutrons hitting the pixel detector 14 and thereby captured in the neutron capture layer 8 is achieved in the region of interest ROI. For generating the time stamps, a clock can be used realized as a counter pulsed with a specific frequency, e.g. 100 MHz for a desired time resolution of 10 ns. The clock can be reset at the beginning of the experiment to define the time t₀ = 0.

As it can be seen from figure 4, the region of interest ROI consist of an 3x3 array of photodetector diodes 2. It should be mentioned that, alternatively, a region of interest may be even larger or even smaller down to only one photodetector diode 2.

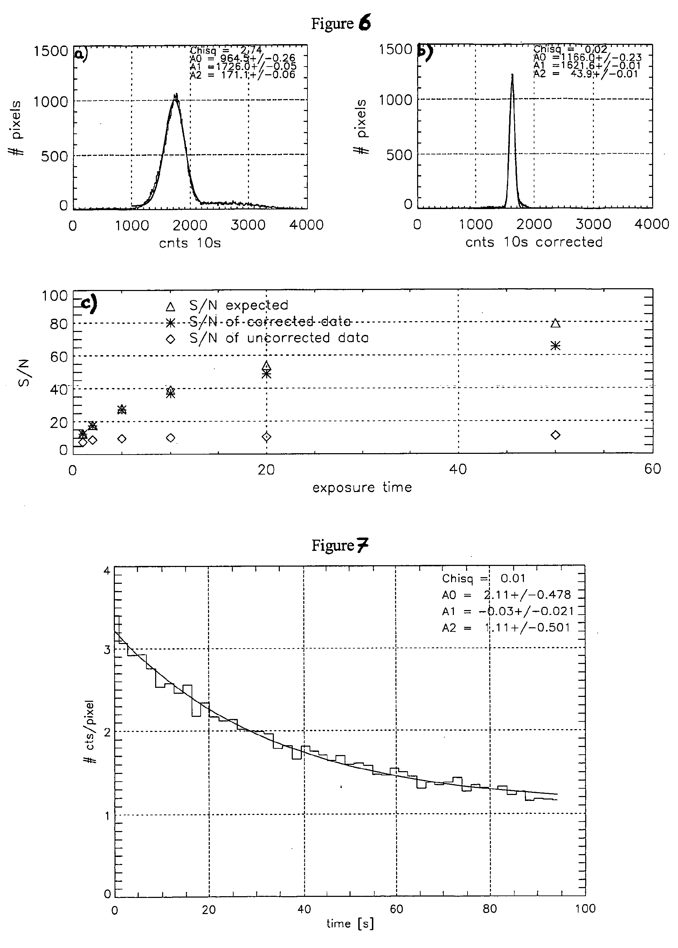

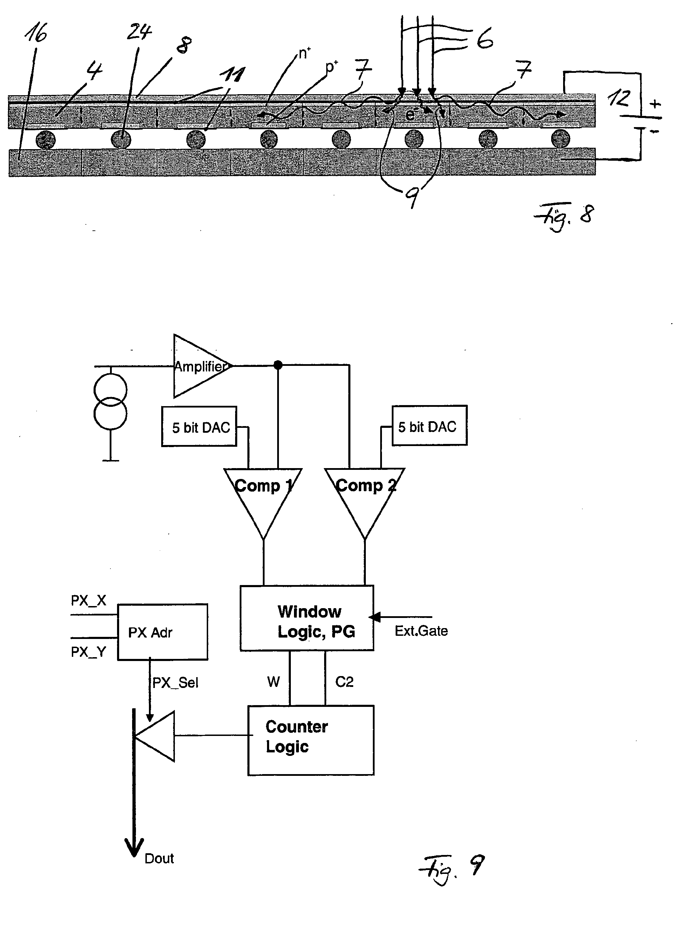

The data shown in the figures 6 and 7 has been gained from the so-called PILATUS project at the Paul Scherrer Institute. This project was originally a large area pixel detector system for protein crystallography at Beamline X06SA at the Swiss Light Source (SLS, located in the Paul Scherrer Institute). The fundamental unit of the PILATUS detector is the module, consisting of a single fully-depleted monolithic silicon sensor 80 x 36 mm² x 300 µm thick, bump-bonded to a 2 x 8 array of readout chips using 17 µm diameter indium balls. The readout chips, fabricated on 15 cm wafers in the DMILL radiation tolerant CMOS process, are 10 x 20 mm² and contain a 44 x 78 array of 217 x 217 µm² pixels.

The sensor is continuous, with no dead area. Double-size pixels are used at the chip boundaries to span the gap between readout chips. The detector operates at room temperature, but is water cooled because each module dissipates about 10 w.

As shown in Figur 5, each pixel contains a charge-sensitive preamplifier and shaper, a discriminator, and a 15-bit pseudo-random counter. Thus, the data are stored in digital form in the pixel. The amplifier noise is 75 e⁻, which permits single conversion electron counting. Each pixel is xy-addressable and contains a 4-bit threshold trim adjustment. Two modes are defined: The counting mode, in which all pixels are individually counting incoming conversion electrons; and the readout mode in which the stored data may be accessed.

After preparation for bump bonding, including dicing of the wafer, 5 µm of ¹⁵⁷Gd were sputtered on one standard Pilatus-sensors by DC magnetron sputtering. After the sputtering process the sensor was reflowed and then bump-bonded with 16 read-out chips.

The read out is performed serially at a clock frequency of 10 MHz, and leads to a readout time of 6.7 ms for each of the afore-mentioned 16 chips. Since all chips are read out in parallel, the readout time of the module is also 6.7 ms. The module control board carries the electronics needed to operate the 2 x 8 array and provide electrical isolation of all signals.

As neutron source, the radiography beam line NEUTRA in sector 32 of the spallation neutron source SINQ in the Paul Scherrer Institute is well suited for dedicated detector tests with thermal neutrons. Because of its very high collimation (L/D-ratio 550 at the end position), no limitation in respect to obtainable spatial resolution is given. The beam contains only few gamma contamination and has a wide field of view (beam diameter 40 cm). The neutron intensity is reasonably high to get images with standard digital systems within few seconds.

The neutron intensity is about 6*10⁶ cm⁻² s⁻¹ at a proton beam current of 1 mA onto the spallation target. The neutron spectrum extracted with the beam line 32 is about a thermal Maxwellian with an averaged energy of 25 meV.

As mentioned above, a 0.3mm thick PILATUS sensor with 5 µm of ¹⁵⁷Gd was used as a converter for the thermal neutrons, which have an absorption length of 1.3 µm in Gd. Following neutron capture in ¹⁵⁷Gd, the excited ¹⁵⁸Gd-core emits a very complicated cascade of γ-rays, conversion electrons followed by secondary radiative and non-radiative processes. The emission spectrum of ¹⁵⁸Gd is well known and the processes, for which the detection efficiency of Si is relevant, are discussed below. The total yield of internal conversion γ-rays per (n, γ) reaction is 1.6, they are in the range of 79.5keV to 10 MeV. The yield of γ-rays between 79.5 and 400 keV is 0.31, for these X-rays, the detection efficiency of the 0.3mm thick Si-sensor is below 3%.

Preferred for detection in the trespass section 4 are the non-radiative decays from the lowest excited states of ¹⁵⁸Gd which lead to conversion electrons of s and p-states, with energies between 29 and 182 keV and a yield of 0.87. The absorption length for the emitted electrons, averaged over 4n and the electron energies is 11.6 µm, so they are very well detected within each distinct photodetector diode 2. The non-radiative decays leave holes in the K- and L-shells, which are filled by emission of X-rays with in the range of 42 keV to 50 keV (K_{α1,2}, K_{β}), 6 to7 keV (L_{α,β,γ}) or Auger electrons, the K photons with a yield of 0.22. The absorption length of the K_{α,β} X-rays is with 6.2mm much higher. Radiative decays from the two lowest excited states of ¹⁵⁸Gd lead to X-rays with 182 and 79.5keV, respectively. The latter have a range of 1.9 cm in Si. To summarize, the (n,y) reaction in the Gd leads to conversion electrons, for which the detection efficiency of the Si is very favorable, but also to X-rays, which have a high range and for which the detection efficiency is dependent on the emission angle. Due to the exact knowledge of the average number of electron hole pairs generated by an incident conversion electron, the lower threshold and the upper threshold are available in the pixels to selectably detect only these conversion electron in a predetermined energy range, for example in the range of 60 to 80 keV, in order to detect a limited number of decay quantums and to discriminate all other decay quantums per captured neutron which have longer ranges and therefore allow only a poorer spatial resolution of the location where an incident neutron hit the neutron capture layer 8.

Prior to the experiments, a threshold adjustement procedure was performed using a readout unit cell circuitry according to figure 5. This circuitry enables the readout unit cell by using a first comparator Comp and discriminates those particles and radiation that delivers a signal under the lower threshold. The lower thresholds in all the pixels were set to 10 keV with a dispersion of about 0.36 keV.

Alternatively as shown in figure 9, the circuitry may comprise a first and a second comparator Comp1 resp. Comp2. This circuitry then enables the readout unit cell by using the first comparator Comp1 and the second comparator Comp2 and a window logic unit to discriminate those particles and radiation that delivers a signal under the lower threshold or beyong the upper threshold. Using this circuitry allows to individually setting-up a desired window for the electric charge generated in response to an incident conversion electron being within the desired energy range.

Correspondingly, the upper thresholds in all the pixels were set to 80 keV with a dispersion of about 2.1 keV. This was followed by a flat field illumination of the detector, where the neutron beam was fully opened. At a beam-current of 1.3 mA of the primary proton beam, the rate was on average 172 cts/pixel/s, corresponding to an overall rate of 1.2x10⁷ cts/s on the detector. In figure 6a) the distribution of count rates in the pixels of a 10s exposure is shown. 8900 pixels are in the tail at the right of the main peak: The amplifiers in the pixels were saturated with the pulses above 80 keV. Since the discriminatior is AC-coupled to the output of the amplifier, large bipolar pulses could be counted twice. The effect of the flatfield correction on the raw data is shown in Figure 6b). Here the data are flatfield-corrected with an image with on average 27300 counts per pixel, i.e. a statistical error of 0.6%. Since the system is stable, the tail with the double counting pixels is gone. The resulting histograms were fitted with a gaussian of mean m and σ, and the signal to noise ratio S/N is defined as m/σ. Parameters A1 and A2 are given in figures 6a) and 6b). Images were taken with exposure times between 1s and 50s. The resulting of S/N of the raw data, flat-field corrected data and the expected values assuming poisson statistics are show in figure 6c). For all following exposures, several images with 10 s exposure times were taken, added up and then flatfield corrected. Since there is no leakage current and no read-out noise, the S/N ratio is not affected by this procedure.

Since many thermal neutrons penetrate the detector, detector materials are activated. After switching off the beam, the detector was operated in loop mode with 1s exposures every 1.9 s. In Figure 7, the average count-rate per pixel as a function of time is shown. The resulting decay time is 33±23 s. The background from activation of the detector is about 1.8%.

## Claims

1. A pixel detector (50) for neutron radiography, comprising:
a) a layer of photosensitive material (4) coated with a neutron capture layer (8), such as ¹⁵⁷Gd, ¹⁰B etc.;
b) an NxM array of photodetector diodes (2) arranged in said layer of photosensitive material (4); each of said photodetector diodes (2) having a bias potential interface and a diode output interface (20), said bias potential interface of each photodetector diode (2) being connected to said bias potential (12);
c) an NxM array of high gain, low noise readout unit cells (18), one readout unit cell (18) for each photodetector diode (2);
d) each readout unit cell (18) comprising an input interface (22) connected to said diode output interface (20) and a high-gain voltage amplifying means (46) comprising a discriminator unit (COMP) having a threshold unit (DAC+LATCH), a digital counter unit (48) counting an output signal (OS) of the discriminator unit (COMP); and
e) a multiplexing means (MM) comprising a row select (RS) and a column select (CS) circuit allowing to access each readout cell unit (18) individually for controlling the threshold unit (DAC+LATCH) in order to generate a lower and/or an upper threshold.

2. The pixel detector (50) according to claim 1,
**characterized in that**
the thickness of the neutron capture layer (8) is aligned with the energy of the incident neutrons (6).

3. The pixel detector (50) according to claim 1 or 2,
**characterized in that**
an upper and/or lower threshold is set according to the thickness of the neutron capture layer.

4. The pixel detector (50) according to any one of the preceeding claims, **characterized in that**
data processing means (DPM) are comprised being connected via the multiplexer means (MM) to said array of readout unit cells (18) allowing to control each of the readout unit cells (18).

5. The pixel detector (50) according to claim 4,
**characterized in that**
the data processing means (DPM) control via the multiplexing means (MM) one or more of the following functions:
a) programming of the readout unit cell (18) via a port (DIN);
b) readout of the data in the readout unit cell (18) via a port (DOUT);
c) calibration of the readout unit cell (18), preferably a high gain voltage amplifier means (46), via a port (CAL);
d) analyzing the analog signal in the high gain voltage amplifier means (46) for the purpose of diagnosis via a port (AOUT); and
e) setting a lower and/or an upper threshold to the threshold unit (DAC+LATCH).

6. The pixel detector (50) according to any one of the preceding claims, **characterized in that**
a source of threshold voltage supply (UT) is coupled to said high-gain voltage amplifying means (46) comprising at least one adjustable source of threshold voltage supply (TC).

7. A process for detecting incident neutrons (6) using a semiconductor pixel detector (50), comprising:
a) coating the surface of a semiconductor photo diode layer (4) with a neutron capture layer (8);
b) thereby selecting the thickness of the neutron capture layer (8) depending on the penetration depth of the neutrons (6) in order to allow a selectable sort of secondary neutron capture particles and/or radiation (9) to be absorbed in the semiconductor photo diode layer (4) ;
c) setting a lower and/or an upper threshold value to each readout unit cell (18), each photodetector diode (2) having its own readout unit cell (18); and
d) counting an output signal (OS) amplified in the readout unit cell (18) under the appearance of the lower and/or upper threshold value.

8. The process according to claim 7,
**characterized in that**
selecting the sort of secondary neutron capture particles and/or radiation (9) depending on the penetration depth in the semiconductor photo diode layer (4) under the circumstance that the average penetration depth of the selected secondary neutron capture particles and/or radiation (9) is equal or lower than the dimensions of the photodetector diodes (2) disposed in said semiconductor photo diode layer (4).

9. The process according to claim 7 or 8,
**characterized in that**
setting the lower and/or upper threshold in order to discriminate the signals originated from the non-selected secondary neutron capture particles or radiation from further data processing.
